Europäisches Patentamt

European Patent Office

Office européen des brevets

(11) Publication number: **0 205 256**
**B1**

# (12) EUROPEAN PATENT SPECIFICATION

(45) Date of publication of patent specification: **09.01.91**

(51) Int. Cl.⁵: **F 16 F 9/08, B 60 G 17/04, B 60 G 11/30, F 16 K 47/04**

(21) Application number: **86303470.8**

(22) Date of filing: **07.05.86**

(54) Gas switching valve device for a gas suspension system.

(30) Priority: **10.05.85 JP 68963/85**
**10.05.85 JP 68964/85**

(43) Date of publication of application:
**17.12.86 Bulletin 86/51**

(45) Publication of the grant of the patent:
**09.01.91 Bulletin 91/02**

(84) Designated Contracting States:
**DE FR GB**

(56) References cited:
**GB-A- 706 197**
**GB-A-2 134 625**
**US-A-3 537 543**
**US-A-4 041 982**
**US-A-4 125 129**

(73) Proprietor: **TOYOTA JIDOSHA KABUSHIKI KAISHA**
**1, Toyota-cho Toyota-shi**
**Aichi-ken 471 (JP)**

(72) Inventor: **Buma, Shuuichi**
**233, 114-banchi Sakanose, Kosema-cho**
**Toyota-shi Aichi (JP)**
Inventor: **Horiyama, Osamu**
**2673, Dota**
**Kani-shi Gifu (JP)**

(74) Representative: **Purvis, William Michael Cameron et al**
**D. Young & Co. 10 Staple Inn**
**London WC1V 7RD (GB)**

Courier Press, Leamington Spa, England.

## Description

This invention relates to a gas switching valve device for a gas suspension system such as an air suspension system for a vehicle. Such a suspension system has a plurality of gas or air chambers divided by partition walls or diaphragms operative freely to adjust the amount of air flowing between respective air chambers.

Vehicle air suspension systems are known wherein air chambers are provided above a shock absorber provided between the body and axle of the vehicle to produce a spring action with high pressure air enclosed in the air chambers.

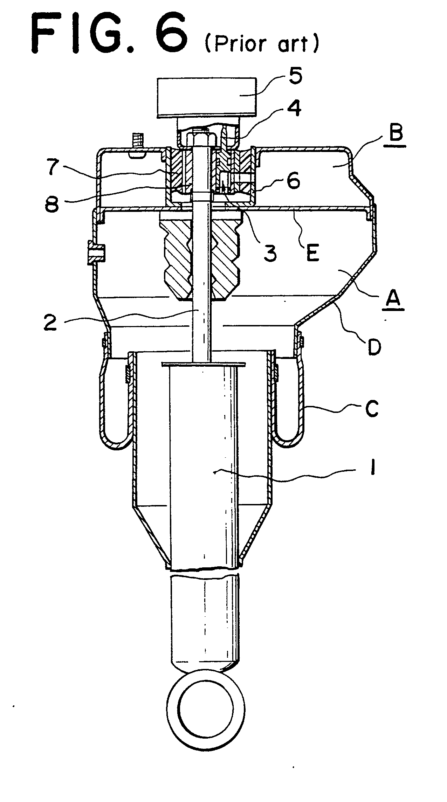

An air chamber in an air suspension system is divided usually into a plurality of, for example, two air chambers and the respective air chambers are connected to or disconnected from each other to vary the so-called air spring constant and to improve the riding comfort of the vehicle equipped with this air suspension system. Such a conventional air suspension system is shown, for example, in Figures 6 to 8 of the accompanying drawings.

This conventional air suspension system has two air chambers A and B, a diaphragm C, a housing D, and a partition wall E between the upper end part of a cylinder 1 and the upper end part of a piston rod 2 slidable projecting from the cylinder 1, and is provided with a switching valve 4 in an air flow path 3 connecting the two air chambers A and B with each other. The switching valve 4 is operable by an actuator 5 provided at the upper end of the piston rod 2 to connect the above mentioned air chambers A and B with each other to make a so-called soft air spring constant or to throttle or disconnect the above mentioned air chambers A and B from each other to make a so-called hard air spring constant by utilizing only the main air chamber A.

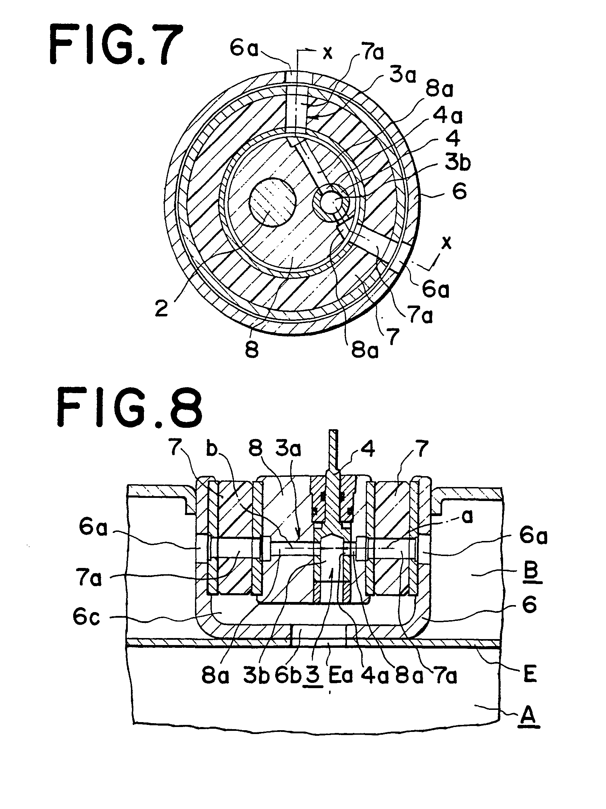

As shown in Figures 7 and 8, a housing 8 is held in a rubber bush 7 within a casing 6 formed to enclose the upper end part of the piston rod 2 and the switching valve 4 is a rotary valve contained and fitted rotatably within this housing 8. The air flow path 3 consists of an air chamber B side path 3a and an air chamber A side path 3b. One path 3a is formed by a port 6a of the casing 6, port 7a of the rubber bush 7 and port 8a of the housing 8. The other path 3b is formed by an opening Ea of the partition wall E, opening 6b of the casing 6 and lower chamber 6c of the casing 6. The paths 3a and 3b are connected with each other through a path 4a provided in the rotary valve 4 so that, when the rotary valve 4 is rotated to displace the position of the path 4a, the paths 3a and 3b will be throttled or disconnected and air chambers A and B will be disconnected from each other.

Therefore, when the switching valve 4 which is the rotary valve is operated, any desired air spring constant can be obtained and the riding comfort, for example, of a vehicle or the like will be improved.

However, when both air chambers A and B are connected with each other, if the air suspension system operates to extend the piston and cylinder, an air flow will be produced between the air chambers A and B through the path 3, and the air flow through the path 3 will be in a so-called high speed state. When particularly the air suspension system operates to extend the piston and cylinder such air flows are produced as are indicated by the arrows a and b in Figure 8 towards the air chamber A from the air chamber B through both paths 8a, which are opposite to each other, and through the paths 4a of the switching valve, the air flows from both directions will collide with each other in the path 3b within the switching valve 4. This produces turbulence and undesired noise will be generated by the turbulence.

Also, at this time, the air chamber B side will be higher in pressure than the air chamber A side, so that the high pressure air flowing into the path 3b, within the switching valve 4 through the paths 4a, 4a of the switching valve 4 will quickly be reduced in pressure and a so-called swishing sound will undesirably be generated.

Patent Specification US-A-3 537 543 discloses a plug to be engaged in an air outlet passageway and having at least three preferably tapered openings therein with their axes parallel to the axis of the passageway and to reduce the noise produced by air flowing through and out of the air outlet passageway.

There is thus a need for a generally improved gas switching valve device which at least minimises the production of this swishing sound, and which at least minimises gas flow turbulence and associated noise.

According to the invention there is provided a gas switching valve device for a gas suspension system in which high pressure is enclosed within and fed between first and second chambers to obtain a spring action, the device including a rotary valve rotatably located in a gas path connecting the first and second gas chambers, a gas cushioning chamber and a stopper, wherein the gas cushioning chamber is located between and is in gas communication with the rotary valve and the stopper. The stopper has special gas flow paths comprising a plurality of fine bore holes formed axially through the stopper or two rectifying grooves extending axially along the stopper; and the gas cushioning chamber can be put in gas communication with, or cut off from the gas communication with the second air chamber by and through the rotary valve and is in gas communication with the first air chamber through the axial paths provided in the stopper to minimise the production of sound during gas movement.

For a better understanding of the present invention and to show how the same may be carried into effect, reference will now be made, by way of example, to the accompanying drawings, in which:-

Figure 1 is a magnified vertically sectioned view of a gas switching valve device, in an air suspension system, according to a first embodiment of the present invention,

Figure 2 is a perspective view of a stopper used in the switching valve device in Figure 1,

Figure 3 is a magnified vertically sectioned view of a gas switching valve device, in an air suspension system, according to another embodiment of the present invention,

Figure 4 is a perspective view of a rotary valve and stopper used in the switching valve device in Figure 3,

Figure 5 is a cross-sectioned view of the rotary valve of Figure 4,

Figure 6 is a vertically sectioned view of a conventional air suspension system,

Figure 7 is a magnified cross-sectioned view of the conventional switching valve device of Figure 6, and

Figure 8 is a vertically sectioned view on line X-X in Figure 7.

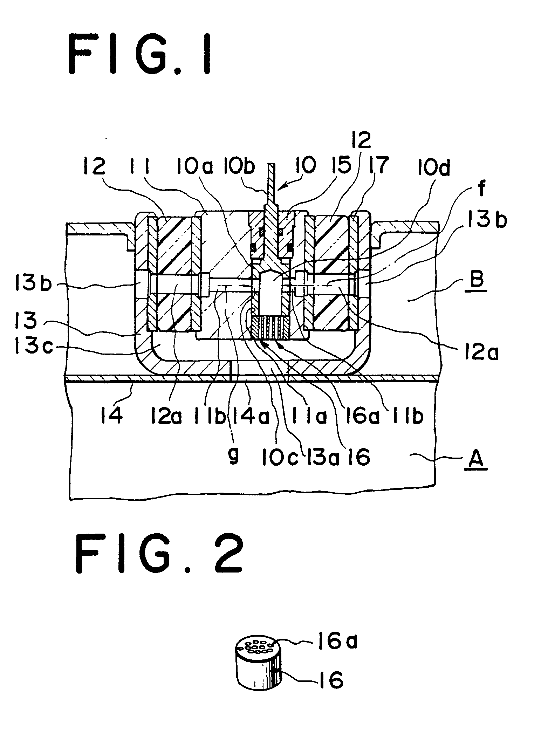

Embodiments of the present invention are illustrated in the accompanying Figures 1 to 5.

Figures 1 and 2 show a switching valve device of the invention and a stopper thereof for minimising the generation of a swishing sound in use of the device in a gas suspension system such as an air suspension system for a vehicle.

In the switching valve device, as in the conventional air suspension and valve device of Figure 6 to 8 as hereinbefore described, for example, two air chambers A and B are provided for controllable interconnection for passage of air therebetween, throttled passage of air therebetween, or no passage of air therebetween so that, when the two air chambers A and B are interconnected to allow air passage therebetween, a soft airspring constant will be obtained but, when they are disconnected from each other and air cannot flow therebetween (i.e. from one to the other) a hard air-spring constant will be obtained.

A rotary valve 10 which is a switching valve device of the invention is rotatably housed in a through hole 11a in a housing 11 held within a rubber bush 12 which is in turn held in a casing 13 via a sleeve 17. The casing 13 is located in the auxiliary air chamber B and communicates therewith via ports 13b. The casing 13 is also in communication with the main air chamber A via an opening 14a through a partition wall member 14 below the casing 13. To this end communicating openings 13a and 14a are formed respectively in the above mentioned casing 13 and the partition wall member 14. A lower chamber 13c of the casing 13 and the main air chamber A are connected with each other through the openings 13a and 14a.

Two ports 13b opening into the auxiliary air chamber B are formed through the casing 13. Two ports 12a, 12a communicating with the ports 13b are formed through the rubber bush 12. Two ports 11b, 11b are formed in the housing 11 and communicate with the ports 12a and also transversely with the through hole 11a formed within the housing.

The rotary valve 10 in the through hole 11a is prevented by a cap member 15 from being pulled out upwardly and by a stopper 16 from falling out downwardly.

The rotary valve 10 has a cylindrically formed rotary sliding part 10a and an upwardly projecting rod part 10b of small diameter. The sliding part 10a has an air chamber 10d formed within it and has two air openings 10c, formed through its barrel part to connect the ports 11b, of the housing 11 with the air chamber 10d.

An actuator is connected to the rod part 10b for movement to operate the rotary valve.

The stopper 16 is a press fit in the lower part of the through hole 11a in the housing 11 to form the lower boundary of the air cushioning chamber 10d within the rotary valve above the stopper 16.

As shown in Figure 2, this stopper is cylindrical and has many fine holes 16a therethrough extending in the direction of its longitudinal axis, which holes 16a are axial paths of small diameter.

Therefore, as indicated by the arrows f and g in Figure 1, with the extending operation of the air suspension in which the piston 2 moves out of the cylinder 1, air will flow first into the air chamber 10d and then into the casing 13 on the low pressure side through the fine holes 16a of the stopper 16, that is, the air within the air chamber B will be reduced in air pressure to be a little higher in pressure than on the air chamber A side in the air chamber 10d within the rotary valve 10, by the throttling action of the many fine holes 16a formed through the stopper 16 but will not be quickly reduced in air pressure to the air pressure in the air chamber A on the low pressure side and therefore the so-called swishing sound which is an air moving sound will be prevented from being generated.

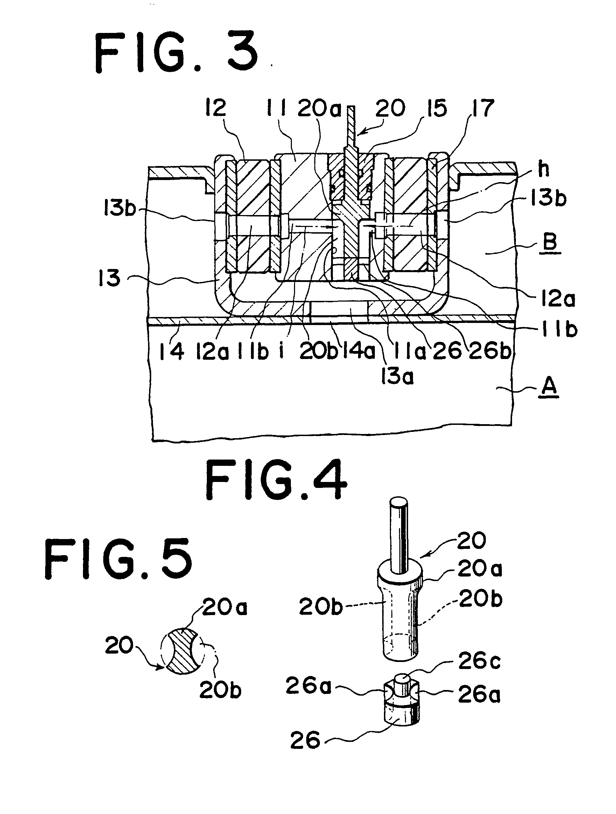

Another embodiment of the present invention will be explained in the following with reference to Figures 3 to 5.

The switching valve device shown in this embodiment also operates to prevent a swishing sound from being generated in use in a suspension system, to prevent air flows from colliding with each other to cause turbulence and to prevent sound from being generated by this turbulence.

As compared with the embodiment in Figure 1, this embodiment has a modified rotary valve and stopper but is the same in other ways as the embodiment in Figure 1. Therefore, like parts carry like reference numerals and will not be further described in detail.

A rotary valve 20 is housed rotatably within the through hole 11a of the housing 11 and is prevented by a cap member 15 from being pulled out upwardly and by a stopper 26 from falling out downwardly. As shown also in Figures 3 and 4, this rotary valve 20 has a plurality of rectifying grooves 20b on a large diameter part 20a rotatably mounted within the through hole 11a. These rectifying grooves 20b are located to be opposite to the ports 11b, 11b of the housing 11 and extend in the axial direction of the rotary valve 20 externally thereof with accurate cross-sections as shown also in Figure 5. That is to say, with the extending operation of the air suspension, when the air from the auxiliary air chamber B flows out towards the main air chamber A as indicated by the arrows h and i in Figure 3, the air flows in both directions will be independent so as not to collide with each other within the rotary valve 20. In this embodiment, as shown also in Figure 4, rectifying grooves 26a, which are axial paths, are formed also on the stopper 26 so that the air flows rectified by the rectifying grooves 20b on the rotary valve 20 may be rectified also in the case of passing through the stopper 26.

A projection 26c is formed on the upper part of the stopper 26 so as to contact the lower end of the rotary valve 20 when the stopper is pressed into the through hole 11a and to form there-around an air cushioning chamber 26b corresponding to the height of the projection 26c between the rotary valve 20 and the stopper 26.

This air cushioning chamber 26b communicates with the respective rectifying grooves 20b and is utilized as an air pressure cushioning chamber. That is to say, as in Figure 1, when the air flows out of the auxiliary air chamber B under a high pressure into the main air chamber A under a low pressure, the air will be first at an intermediate pressure so as not to be quickly reduced to the air pressure of the air chamber A to prevent the swishing sound, which is an air movement sound, being generated.

Thus the present invention has the following effects:

(1) As a cushioning air chamber 10d or 26b is provided between the rotary valve and the stopper 16, 26, when air flows out of one high pressure air chamber into the other low pressure air chamber, the reduction of the air pressure will be gradual and the swishing sound, which is an air movement sound, will not be generated.

(2) When many fine holes 16a are provided to form axial paths through the stopper 16 and the cushioning air chamber is formed above the stopper a silencing effect as in an expansion chamber silencer will be developed.

(3) When the rotary valve is provided with rectifying grooves 20b communicating with the cushioning air chamber 26b, high pressure air flows will be prevented from colliding with each other and the air movement sound will be prevented from being generated by turbulence from the high pressure side. When the stopper is provided with rectifying grooves 26a also as axial paths coinciding with the rectifying grooves 20b of the rotary valve 20, these sound preventing measures will be more effective.

## Claims

1. A gas switching valve device for a gas suspension system in which high pressure gas is enclosed within and fed between first and second chambers (A, B) to obtain a spring action, the device including a rotary valve (10, 20) rotatably located in a gas path connecting the first and second gas chambers (A, B), a gas cushioning chamber (10d, 26b) and a stopper (16, 26), wherein the gas cushioning chamber (10d, 26b) is located between and is in gas communication with the rotary valve (10, 20) and the stopper (16, 26); the stopper has special gas flow paths comprising a plurality of fine bore holes (16a) formed axially through the stopper (16) or two rectifying grooves (26a) extending axially along the stopper (16); and the gas cushioning chamber (10b, 26b) can be put in gas communication with, or cut off from gas communication with the second air chamber (B) by and through the rotary valve (10, 20) and is in gas communication with the first air chamber (A) through the axial paths (16a, 26a) provided in the stopper (16, 26) to minimise the production of sound during gas movement.

2. A device according to claim 1, wherein the gas cushioning chamber (10d) is formed within a cylindrical rotary sliding part (10a) of the rotary valve (10).

3. A device according to claim 1, wherein a projection (26c) is formed on the stopper (26) to contact the adjacent part (20a) of the rotary valve (20) and to define the gas cushioning chamber (26b), of the height of the projection (26c), between the rotary valve (20) and the stopper (26).

4. A device according to claim 1 or claim 3, wherein two rectifying grooves (20b) are provided on part (20a) of the rotary valve to form gas flow paths for putting the gas cushioning chamber (26b) in gas flow communication with the second gas chamber (B).

5. A vehicle air suspension system including an air switching valve device according to any one of claims 1 to 4.

## Patentansprüche

1. Gasverteilungsventileinrichtung für ein Gas-Trägersystem, bei welchem Gas unter hohem Druck innerhalb erster und zweiter Kammern (A, B) eingeschlossen und zwischen diesen zugeführt wird, um eine Federwirkung zu erhalten, wobei die Einrichtung ein Drehventil (10, 20) aufweist, welches drehbar in einem Gasweg angeordnet ist, der die ersten und zweiten Gaskammern (A, B) miteinander verbindet, eine Gaskissenkammer (10d, 26b) und einen Stopper (16, 26) aufweist, wobei die Gaskissenkammer (10d, 26b) zwischen dem Drehventil (10, 20) und dem Stopper (16, 26) angeordnet ist und mit diesen in Gasverbindung steht, der Stopper spezielle Gasströmungswege hat, die eine Mehrzahl von feinen Bohrlöchern (16a) aufweisen, welche in axialer Richtung durch den Stopper (16) hindurch ausgebildet sind oder zwei gleichrichtende Nuten (26a), welche sich in axialer Richtung entlang des Stoppers (16) erstrecken, und die Gaskissenkammer (10b, 26b) in Gasverbindung mit der zweiten Luftkammer (B) gebracht oder von der Gasverbindung mit dieser abgeschnitten werden kann durch und über das Drehventil (10, 20) in Gasverbindung mit der ersten Luftkammer (A) über die axialen Wege (16a, 26a) steht, die in dem Stopper (16, 26) vorgesehen sind, um die Erzeugung von Schall während der Gasbewegung zu minimieren.

2. Einrichtung nach Anspruch 1, wobei die Gaskissenkammer (10d) innerhalb eines zylindrischen, drehend gleitenden Teiles (10a) des Drehventiles (10) ausgebildet ist.

3. Einrichtung nach Anspruch 1, wobei ein Vorsprung (26c) an dem Stopper (26) ausgebildet ist, um mit dem angrenzenden Teil (20a) des Drehventiles (20) in Berührung zu treten und um die Gaskissenkammer (26b) in der Höhe des Vorsprunges (26c) zwischen dem Drehventil (20) und dem Stopper (26) festzulegen.

4. Einrichtung nach Anspruch 1 oder 3, wobei zwei gleichrichtende Nuten (20b) an dem Teil (20a) des Drehventiles vorgesehen sind, um Gasströmungswege vorzusehen, um die Gaskissenkammer (26b) in Gasströmungsverbindung mit der zweiten Gaskammer (B) zu bringen.

5. Fahrzeugluftträgersystem, welches eine Luftverteilerventileinrichtung entsprechend einem der Ansprüche 1 bis 4 aufweist.

**Revendications**

1. Dispositif de soupape pneumatique pour un système de suspension pneumatique dans lequel de l'air à pression élevée se trouve enfermé et distribué entre une première et une seconde chambre (A, B) pour obtenir une action de rappel, le dispositif comprenant une soupape rotative (10, 20) placée à rotation dans un passage d'air reliant la première et la seconde chambre d'air (A, B), une chambre d'amortissement d'air (10d, 26b) et un arrêt (16, 26), où la chambre d'amortissement d'air (10d, 26b) est située entre la soupape rotative (10, 20) et l'arrêt (16, 26) et est en communication d'air avec ceux-ci; l'arrêt comporte des passages de flux d'air spéciaux comprenant une pluralité de petits orifices d'alésage (16a) formés axialement dans l'arrêt (16) ou deux gorges de redressement (26a) s'étendant axialement le long de l'arrêt (16); et la chambre d'amortissement d'air (10d, 26b) peut être mise en communication d'air avec la seconde chambre d'air (B), ou coupée de celle-ci, par la soupape rotative (10, 20) et à travers celle-ci et est en communication d'air avec la première chambre d'air (A) par les passages axiaux prévus (16a, 26a) dans l'arrêt (16, 26) pour minimiser la production de bruit au cours du déplacement d'air.

2. Dispositif selon la revendication 1, dans lequel la chambre d'amortissement d'air (10d) est formée au sein d'un tiroir tournant cylindrique (10a) de la soupape rotative (10).

3. Dispositif selon la revendication 1, dans lequel une projection (26c) est formée sur l'arrêt (26) pour contacter la partie adjacente (20a) de la soupape rotative (20) et pour former la chambre d'amortissement d'air (26b), de la hauteur de la projection (26c), entre la soupape rotative (20) et l'arrêt (16).

4. Dispositif selon la revendication 1 ou 3, dans lequel deux gorges de redressement (20b) sont fournies sur la partie (20a) de la soupape rotative pour former des passages de circulation d'air pour mettre la chambre d'amortissement d'air (26b) en communication d'air avec la seconde chambre d'air (B).

5. Système de suspension pneumatique de véhicule comprenant un dispositif de soupape pneumatique selon l'une quelconque des revendications 1 à 4.

# FIG. 1

# FIG. 2

# FIG. 3

# FIG.4

# FIG.5

# FIG. 6 (Prior art)

# FIG.7

# FIG.8